# EUROPÄISCHE PATENTSCHRIFT

(11) **EP 4 309 491 B1**
(45) Veröffentlichungstag und Bekanntmachung des Hinweises auf die Patenterteilung: **16.04.2025**
(21) Anmeldenummer: 23184795.5
(22) Anmeldetag: 11.07.2023
(51) Int. Cl.: A01F 15/08, B30B 5/06

(54) **RUNDBALLENPRESSE**
ROUND BALER
PRESSE À BALLES RONDES

(30) Priorität: 21.07.2022 DE 102022118254
(43) Veröffentlichungstag der Anmeldung: 24.01.2024
(73) Patentinhaber: Deere & Company, Moline, IL 61265 (US)
(72) Erfinder: DUTERTRE, MATTHIEU, 68163 Mannheim (DE)
(74) Vertreter: Stein, Stefan

(56) Entgegenhaltungen:
- EP-A1- 3 760 032
- US-A1- 2008 087 177
- US-A1- 2014 013 970
- US-A1- 2017 027 107

## Beschreibung

Die Erfindung betrifft eine Rundballenpresse, insbesondere eine landwirtschaftliche Rundballenpresse mit variablem Pressraum zur Herstellung zylindrischer Rundballen, mit wenigstens einem umlaufenden Pressmittel und wenigstens einer Sensoreinrichtung mit einer Schwenkeinrichtung, einem Aufnehmer, der an der Schwenkeinrichtung in Richtung des Pressmittels vorgespannt aufgenommen ist, so dass er in Kontakt mit dem Pressmittel steht, und einem Sensor zur Ermittlung der Position der Schwenkeinrichtung.

Rundballenpressen werden dazu verwendet, Erntegut oder Pressgut aufzunehmen und dieses zu zylindrischen Ballen zu formen. Derartige Rundballenpressen werden häufig in der Landwirtschaft zur Bergung von Stroh oder Heu eingesetzt, das in Schwaden auf dem Boden abgelegt ist. Die äußere Form des Rundballens hängt von der Gleichmäßigkeit der Zufuhr des Pressguts ab. Bei ungleichmäßiger Zufuhr von Pressgut kann zudem eine einseitige Belastung des Pressmittels, das den Rundballen in Drehung versetzt, erfolgen, so dass sich neben der Bewegungskomponente in der Laufrichtung des Pressmittels eine quer dazu verlaufende Komponente ergibt, die das Pressmittel möglicherweise schräg laufen lässt. Ein derartiger Schräglauf des Pressmittels kann dazu führen, dass das Pressmittel reißt, oder, wenn mehrere Pressmittel parallel zueinander auf die Rollen aufgelegt sind, diese sich überkreuzen. Zu Beschädigungen des Pressmittels kann es insbesondere dann kommen, wenn das Pressmittel bedingt durch den Schräglauf mit einer Seitenwand oder einem Rahmen der Rundballenpresse in Kontakt tritt.

Aus der US-PS-42 24 867 ist es bekannt, die Form des Rundballens mittels Sensoren zu erfassen, die die Spannung des als Riemen ausgebildeten Pressmittels ermitteln, und mittels einer optischen oder akustischen Anzeige einer Bedienungsperson einen entsprechenden Hinweis über die Unförmigkeit des Rundballens zu geben. Die Bedienungsperson kann durch eine Änderung der Beschickung, z. B. durch eine Anpassung der Fahrweise, der Seite des Pressraums mehr Pressgut zuführen, der es an Pressgut mangelt. Es kann vorkommen, dass derartige Sensoren bei einem Schräglauf des Pressmittel nicht optimal funktionieren. Aus der EP3 760 032 A1 ist eine Rundballenpresse gemäß dem Oberbegriff des Anspruchs 1 bekannt.

Die der Erfindung zugrunde liegende Aufgabe wird daher darin gesehen, eine Rundballenpresse vorzusehen, durch welche die vorgenannten Nachteile überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Diesbezüglich weist eine Rundballenpresse mit wenigstens einem umlaufenden Pressmittel wenigstens eine Sensoreinrichtung auf, die wiederum eine Schwenkeinrichtung, einen Aufnehmer und einen Sensor aufweist. Der Aufnehmer ist an der Schwenkeinrichtung in Richtung des Pressmittels vorgespannt aufgenommen, so dass er in Kontakt mit dem Pressmittel steht, um die Schwenkeinrichtung in Abhängigkeit von einer Spannung des Pressmittels zu verschwenken. Der Sensor dient zur Ermittlung der Position der Schwenkeinrichtung. Die durch den Sensor zur Verfügung gestellten Informationen können Rückschlüsse auf die Gestalt des gebildeten Ballens ermöglichen, so dass beispielsweise durch eine Bedienungsperson und/oder eine Steuereinheit Einfluss auf die Gutzufuhr bzw. die Beschickung der Rundballenpresse genommen werden kann. Die Sensoreinrichtung weist darüber hinaus einen Abweiser auf, der die Schwenkeinrichtung bei Kontakt mit dem Pressmittel unabhängig von der Spannung des Pressmittels verschwenkt. Auf diese Weise kann der Abweiser die Schwenkeinrichtung verschwenken, wenn bzw. sobald das Pressmittel nicht länger optimal umläuft, sich beispielsweise schräg, insbesondere in Richtung einer Seitenwand der Rundballenpresse verschiebt. Der Sensor stellt dann eine entsprechende Information zur Verfügung, so dass durch die Bedienungsperson und/oder die Steuereinheit Einfluss auf den Betrieb der Rundballenpresse genommen werden kann. Insbesondere handelt es sich bei der Rundballenpresse um eine landwirtschaftliche Rundballenpresse zur Herstellung zylindrischer Pressballen. Es ist aber auch denkbar, dass es sich um eine industrielle Rundballenpresse, beispielsweise um eine Ballenpresse zur Herstellung von Ballen aus Papier, Textilien, Abfall oder anderen Materialien handelt.

Besonders günstig ist es, wenn die Schwenkeinrichtung durch den Abweiser abweichend von dem Aufnehmer, vorzugsweise stärker, verschwenkt wird und/oder der Sensor bei einer Verschwenkung durch den Abweiser eine von der durch den Aufnehmer bewirkten Information abweichende Information zur Verfügung stellt, so dass für die Bedienungsperson bzw. die Steuereinheit erkennbar ist, dass eine von der normalen Betriebssituation abweichende Situation, insbesondere im Sinne eines Schräglaufs des Pressmittels, vorliegt.

Ist der Abweiser an den Aufnehmer an der Schwenkeinrichtung zumindest im Wesentlichen angrenzend vorgesehen ist, so kann dies einen kompakten Aufbau der Sensoreinrichtung begünstigen.

Weist die Rundballenpresse wenigstens eine Seitenwand auf und ist die Sensoreinrichtung angrenzend an die Seitenwand vorgesehen, so kann die Sensoreinrichtung entsprechende Informationen liefern, wenn das Pressmittel seine gewünschte Bahn in Richtung der Seitenwand verlagert. Alternativ oder zusätzlich kann der Abweiser auf einer der Seitenwand zugewandten Seite des Aufnehmers vorgesehen sein, so dass er dann in Kontakt mit dem Pressmittel gelangt, wenn das Pressmittel sich in Richtung der Seitenwand verlagert.

Es ist denkbar, dass der Aufnehmer starr ausgebildet ist. Eine verbesserte Funktion ergibt sich aber, wenn er wenigstens eine, insbesondere drehbare Rolle aufweist. Eine solche Rolle kann an dem Pressmittel anliegen und vorzugsweise zumindest teilweise mit diesem rotieren. So kann sich eine verbesserte Führung ergeben und/oder die Reibung und damit der Verschleiß an Pressmittel und/oder Aufnehmer reduziert werden.

Besonders einfach im Aufbau ist es, wenn dass der Aufnehmer und der Abweiser, vorzugsweise fest, mit einer gemeinsamen Schwenkwelle verbunden sind.

Besonders günstig ist es, wenn die Sensoreinrichtung eine Halterung aufweist. Über die Halterung kann die Sensoreinrichtung beispielsweise an einem Rahmen der Ballenpresse angebracht werden. Die Schwenkeinrichtung kann schwenkbar an der Halterung vorgesehen sein. Beispielsweise kann vorgesehen sein, dass die Schwenkwelle drehbar in einer an der Halterung vorgesehenen Lagereinrichtung aufgenommen wird.

Es ist vorteilhaft, wenn der Sensor als Potentiometer ausgebildet ist. Beispielsweise kann der Sensor eine Verschwenkung der Schwenkeinrichtung mit Bezug auf die Rundballenpresse und/oder die Halterung aufnehmen.

Die Vorspannung der Schwenkeinrichtung kann in einfacher Weise mittels eines Federelements erreicht werden, wobei das Federelement vorzugsweise mit einem ersten Ende, vorzugsweise über einen Schwenkarm, an der Schwenkeinrichtung und mit einem zweiten Ende an der Halterung angreift. Vorzugsweise ist das Federelement in der Art einer Zugfeder ausgebildet.

Es ist denkbar, dass die Rundballenpresse mit nur einer Sensoreinrichtung ausgestattet ist. Besonders günstig ist es aber, wenn die Rundballenpresse zwei Sensoreinrichtungen aufweist, die jeweils angrenzend an eine Seitenwand der Rundballenpresse angeordnet sind. Das Pressmittel kann einteilig ausgeführt sein, wobei die Sensoreinrichtungen derart vorgesehen sein können, dass sie mit jeweiligen Randbereichen des Pressmittels zusammenwirken. Vorzugsweise weist das Pressmittel aber zwei Pressriemen auf, wobei jeweils eine der Sensoreinrichtungen mit einem der Pressriemen zusammenwirkt.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine Seitenansicht einer Rundballenpresse mit mehreren in einem Gehäuse angeordneten Walzen, einem diese umschlingenden Pressmittel und einer Sensorvorrichtung mit zwei Sensoreinrichtungen,
- Fig. 2: eine vergrößerte, perspektivische Ansicht einer der Sensoreinrichtung,
- Fig. 3 a-b: eine vergrößerte Ausschnittsdarstellung des zwei Pressriemen aufweisenden Pressmittels und einer der Sensoreinrichtungen in einer ersten Stellung von oberhalb bzw. unterhalb des Pressmittels aus betrachtet und
- Fig. 4 a, b: eine den Figuren 3a, b entsprechende Darstellung des Pressmittel bzw. der Pressriemen und der Sensoreinrichtung in einer zweiten Stellung.

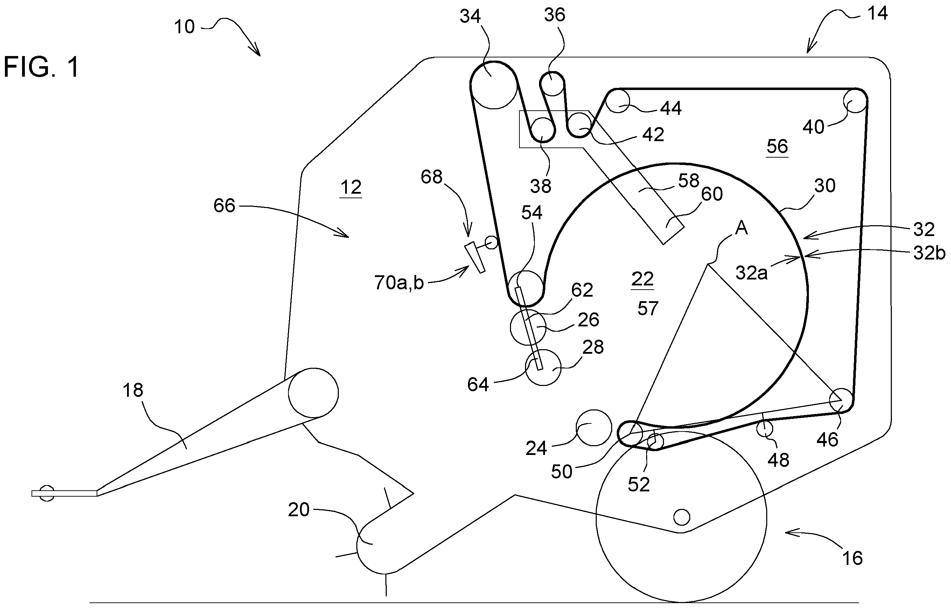

In der Figur 1 ist eine Ausführungsform einer Rundballenpresse 10 dargestellt, die ein Gehäuse 12 und einen Rahmen 14 aufweist, der sich auf einem Fahrwerk 16 abstützt. An der Vorderseite des Rahmens 14 ist eine Deichsel 18 angeordnet, um die Rundballenpresse 10 an einem Traktor anhängen und über ein Feld ziehen zu können. Eine Aufnahmevorrichtung 20 in Form einer Pick-Up dient zur Aufnahme von auf dem Boden liegenden Erntegut, z. B. in einem Schwad abgelegten Heu oder Stroh. Das von der Aufnahmevorrichtung 20 aufgenommene Erntegut wird dem Einlass 22 eines Ballenpressraums 23 zugeführt und dort spiralförmig zu einem rundzylindrischen Ballen aufgerollt, gebunden und anschließend auf den Boden abgelegt. Am Einlass 22 des Ballenpressraums 23 sind eine untere, stationäre Rolle 24 und zwei obere Rollen 26, 28 positioniert. Der Ballenpressraum 23 wird weiterhin durch ein endloses Pressmittel 30 in Form zweier seitlich unmittelbar nebeneinander anliegender Pressriemen 32 gebildet, die um eine Anzahl von Walzen 34 - 54 geführt wird und die eine dem zu bildenden Ballen zugewandte Innenseite 32a und eine Außenseite 32b aufweisen. Während der Ballenpressraum 22 umfangsseitig im Wesentlichen von dem Pressmittel 30 und den Rollen 24 bis 28 umgeben wird, wird er seitlich von Seitenwänden 56 begrenzt.

Vier der Walzen 46 bis 52 sind am unteren Ende eines deltaförmigen Trägers 57 frei drehbar gelagert, der um seine obere Spitze um eine horizontal und quer zur Vorwärtsrichtung verlaufende Drehachse A schwenkbar angelenkt ist und mit einem Aktor (nicht gezeigt) aus der in Fig. 1 dargestellten Ballenbildungsposition in eine nach hinten und oben verschwenkte Ballenauswurfposition verbringbar ist.

Ein Spannmechanismus zur Straffung des Pressmittels 30 umfasst einen Spannarm 58, zwei an dem radial außenliegenden Endbereich des Spannarms beweglich angeordnete Walzen 38, 42 und ein nicht gezeigtes Spannelement. Der Spannarm 58 ist im Bereich der Seitenwände 38 oberhalb und vor der Drehachse A um eine horizontal und quer zur Vorwärtsrichtung verlaufende Achse schwenkbar in einem Lager 60 gelagert und erstreckt sich bis unter die Ebene, in welcher die ortsfesten oberen Walzen 34, 36, 44 angeordnet sind. Das Spannelement ist in üblicher Weise als eine mechanische Feder oder als ein Hydraulikmotor ausgebildet.

Die oberen Rollen 26, 28 und die Walze 54 sind an einem schwenkbaren Schwenkrahmen 64 befestigt, der in seinem Mittenbereich um eine sich horizontal und quer zur Vorwärtsrichtung erstreckende Welle 62 gelagert ist. Die Walze 54 und die Rollen 26, 28 sind frei drehbar in dem Schwenkrahmen 64 gelagert, wobei die Rolle 26 koaxial zu der Welle 62 verläuft. Der Schwenkrahmen 64 kann mittels eines nicht gezeigten Spannelements in eine bestimmte Stellung vorgespannt werden.

Das Pressmittel 30 wird mittels des Spannarms 58 stets so fest an die drehend angetriebene, ortsfeste Walze 34 angelegt, dass seine Mitnahme gewährleistet ist. Auch die Walze 54 wird rotativ angetrieben. Das Pressmittel 30 nimmt einen Anfangszustand ein, in dem es gerade gestreckt den Einlass 22 überbrückt, und einen Endzustand, in dem es sich wie eine große Schlaufe um den Ballen 36 schlingt, etwa wie in der Figur 1 gezeigt. Der Ballenpressraum 12 ist somit in seiner Größe veränderlich, d. h. sein Durchmesser nimmt mit der Größe des Ballens zu. Der Ballen befindet sich während seiner Bildung in dem Ballenpressraum 12 und wird von dem Pressmittel 30 größtenteils umschlungen, fällt aber aus dem Ballenpressraum 12 nach hinten auf den Boden, sobald der Träger 57 mit den beweglichen Walzen 46 bis 52 mit Blick auf die Zeichnung entgegen dem Uhrzeigerdrehsinn nach oben schwenkt.

In einem der Deichsel 18 zugewandten Bereich 66 des Ballenpressraums 23 ist eine Sensorvorrichtung 68 zur Ermittlung einer Spannung in dem Pressmittel 30 vorgesehen. Die Sensorvorrichtung 68 weist angrenzend an eine erste bzw. eine zweite Seitenwand 56 des Gehäuses jeweils eine Sensoreinrichtung 70 auf. Die Sensoreinrichtungen 70 sind im Wesentlichen identisch, wenn auch spiegelbildlich ausgebildet, wobei im Folgenden nur eine der Sensoreinrichtungen 70 genauer beschrieben wird.

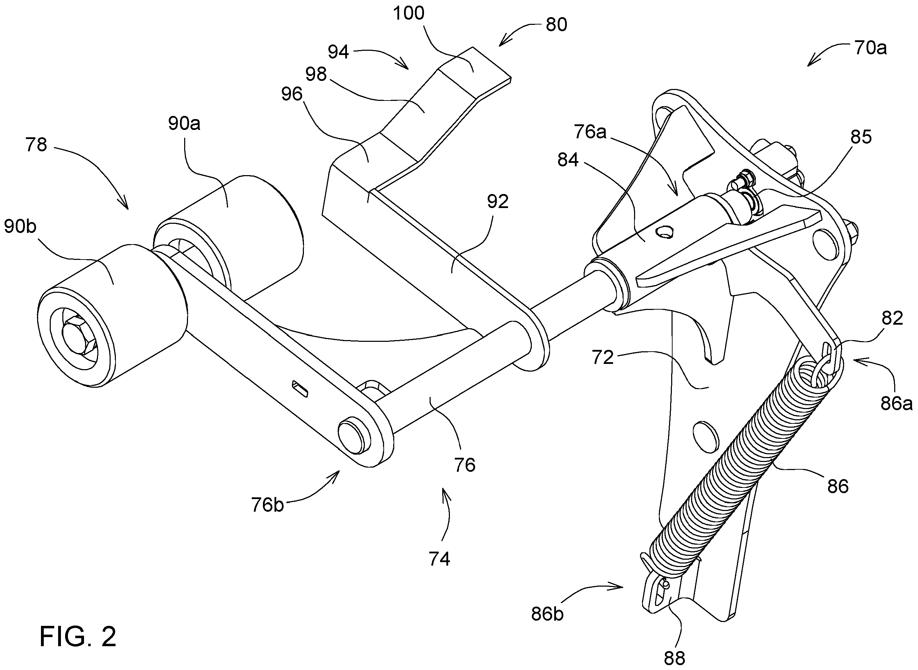

Es wird nun auch auf die Figur 2 der Zeichnung Bezug genommen, in der die aus Richtung der Deichsel 18 betrachtet links angeordnete Sensoreinrichtung 70 genauer dargestellt wird. Die Sensoreinrichtung 70 weist eine Halterung 72, über die die Sensoreinrichtung 70 in bekannter Art und Weise an dem Rahmen 14 der Rundballenpresse 10 angebracht ist, und eine Schwenkeinrichtung 74 auf. Die Schwenkeinrichtung 74 umfasst eine Schwenkwelle 76, einen Aufnehmer 78, einen Abweiser 80 und einen Schwenkarm 82. Die Halterung 72 wiederum weist eine starr mit ihr verbundene Lagereinrichtung 84 auf, in der die Schwenkwelle 76 drehbar aufgenommen wird, die sich von der Halterung 72 im Wesentlichen horizontal in Richtung des Ballenpressraums 23 erstreckt.

Die Schwenkwelle 76 weist einen ersten Endbereich 76a, der an die Halterung 72 angrenzt, und einen dem ersten Endbereich 76a gegenüberliegenden zweiten Endbereich 76b auf. An der Halterung 72iist ein Sensor 85 vorgesehen, der mit dem ersten Endbereich 76a der Schwenkwelle 76 derart zusammenwirkt, dass er einen Grad an Verschwenkung zwischen der Schwenkeinrichtung 74 bzw. der Schwenkwelle 76 und der Halterung 72 ermitteln kann. Vorzugsweise ist der Sensor 78 in der Art eines Potentiometer ausgebildet, das mit einer nicht gezeigten Steuereinheit der Rundballenpresse 10 zusammenwirkt und dieser und/oder einer Bedienungsperson Informationen über den Grad der Verschwenkung der Schwenkwelle 76 zur Verfügung stellt.

Der Schwenkarm 82 ist mit der Schwenkwelle 76 angrenzend an den ersten Endbereich 76a und der Aufnehmer 78 angrenzend an den zweiten Endbereich 76b fest verbunden. Der Aufnehmer 80 wiederum ist zwischen den beiden Endbereichen 76a, b vorgesehen und mit der Schwenkwelle 76 ebenfalls drehfest verbunden. Der Schwenkarm 82 ist zu dem Aufnehmer 78 bzw. dem Abweiser 80 zumindest annähernd um 180° versetzt angeordnet.

An dem Schwenkarm 82 greift ein Federelement 86 mit einem ersten Ende 86a an. Ein zweites Ende 86b des Federelements 86 ist mit einem von dieser in Richtung des Pressraums 23 wegkragenden Absatz 88 der Halterung 72 derart verbunden, dass es die Schwenkwelle 76 und damit den Abweiser 80 und den Aufnehmer 78 in Richtung des Pressmittels 30 vorspannt. Das Federelement 86 ist hierzu vorzugsweise als eine Zugfeder ausgeführt, kann aber auch in anderer geeigneter Art ausgebildet sein.

An dem Aufnehmer 78 sind in einem der Schwenkwelle 76 abgewandten Bereich drehbar zwei Rollen 90 aufgenommen, welche in einer im Wesentlichen normalen Betriebssituation an dem Pressmittel 32 bzw. an der Außenseite 32b eines der Pressriemen 32 anliegen, um mit diesem zusammenzuwirken.

Der Abweiser 78 weist einen sich im Wesentlichen parallel zu dem Aufnehmer 78 von der Schwenkwelle 76 weg erstreckenden Träger 92 auf. An dem Träger 92 ist ein doppelt abgewinkelter Halter 94 fest angebracht, der sich von dem Träger 92 in Richtung der Halterung 72 erstreckt. Der Halter 94 ist derart abgewinkelt, dass er angrenzend an den Träger 92 eine Fläche 96 aufweist, welche im Wesentlichen mit einer Oberseite der Rollen 90 fluchtet. An diese Fläche 96 grenzt eine nach oben ansteigende Kontaktfläche 98 an, die in einem in Richtung der Halterung 72 nach unten abgewinkelten Endbereich 100 ausläuft, der zumindest im Wesentlichen parallel zu der Fläche 96 verläuft.

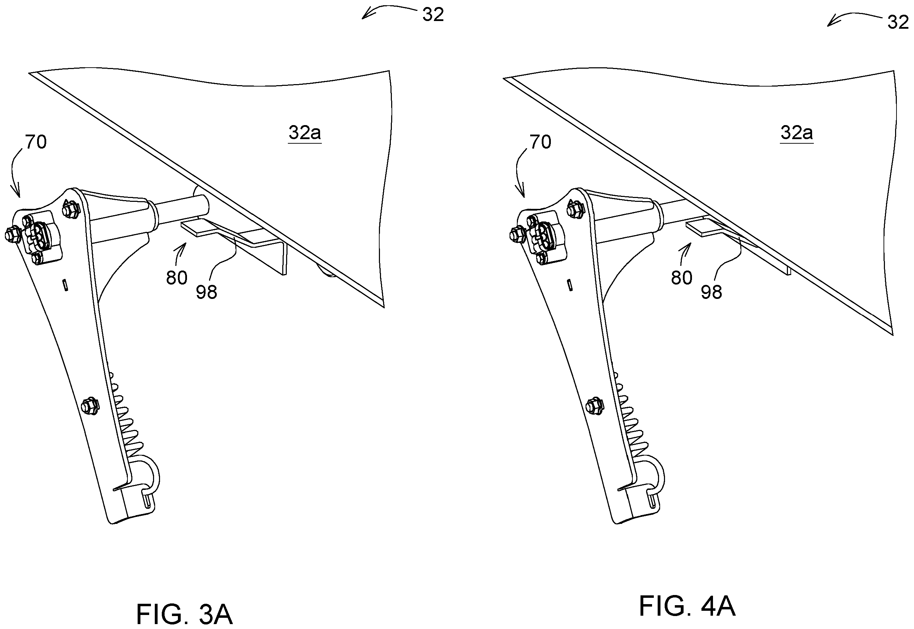

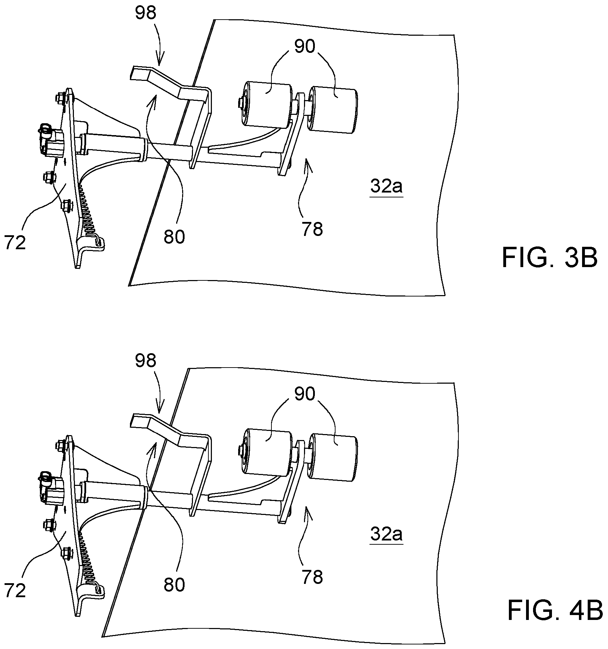

Im Folgenden wird nun genauer auf die Funktionsweise der Sensoreinrichtungen 70 eingegangen. Hierzu wird nun auch Bezug auf die Figuren 3a, b und 4a, b der Zeichnung genommen, in denen wiederum nur eine der Sensoreinrichtungen 70 dargestellt wird. Die Funktionsweise der zweiten Sensoreinrichtung 70 entspricht der Funktionsweise der ersten Sensoreinrichtung 70.

Die Figur 3a, b zeigt jeweils eine der Sensoreinrichtungen 70 in einer Betriebssituation der Rundballenpresse 10, in der das Pressmittel 30 bzw. der mit der jeweiligen Sensoreinrichtung 70 zusammenwirkende Pressriemen 32 möglichst gerade bzw. parallel zu einer nicht gezeigten Längsachse der Rundballenpresse 10 verläuft. Der Aufnehmer der Sensoreinrichtung 70 liegt an dem Pressriemen 32 bzw. seiner Außenseite 32b an und verschwenkt die Schwenkwelle 76 in Abhängigkeit von der Spannung des Pressriemens 32. Ist die Spannung höher, so verschwenkt die Schwenkwelle 76 stärker als bei einer niedrigeren Spannung. Diese Verschwenkung wird durch den Sensor 85 zwischen der Halterung 72 und der Schwenkwelle 76 aufgenommen. Der Sensor 85 gibt den Spannungszustand repräsentierende Werte bzw. Informationen an eine nicht gezeigte Steuereinheit weiter. Auch die gegenüberliegende Sensoreinrichtung 70 ermittelt entsprechend Werte für den gegenüberliegenden Bereich des Pressmittels 30 bzw. den zweiten Pressriemen 32. In einer derartigen Betriebssituation wirkt das Pressmittel 30 bzw. der Pressriemen 32 nicht auf den Abweiser 80 ein.

Anhand der ermittelten Informationen bzw. aufgrund von Unterschieden in den Werten können Rückschlüsse auf die Form des Ballens gezogen werden. So zeigt eine erhöhte Spannung in einem der Pressriemen 32, dass der Ballen im Bereich dieses Pressriemens 32 größer ist als im Bereich des zweiten Pressriemens 32 und/oder einen Maximalwert übersteigt. Die Steuereinheit bzw. eine Bedienungsperson können nun aufgrund der ermittelten Werte beispielsweise die Gutzufuhr/Beschickung entsprechend anpassen. Dies kann beispielsweise derart erfolgen, dass die Rundballenpresse 10 bzw. eine nicht gezeigte Zugmaschine die Spur verändert, um beispielsweise die Aufnahme eines Schwads von Erntegut entsprechend anzupassen.

Es kann nun aber auch vorkommen, dass das Pressmittel 30 bzw. insbesondere einer der Pressriemen 32 insbesondere bedingt durch eine ungleichmäßige Beschickung und dadurch auftretende Querkräfte nicht länger parallel zur Längsachse bzw. schräg verläuft und sich beispielsweise in Richtung der entsprechenden Seitenwand 56 der Rundballenpresse 10 verlagert. In dieser Situation kann es sein, dass der Kontakt zwischen dem Pressriemen 32 und dem Aufnehmer 76 teilweise oder auch vollständig abbricht und/oder über den Sensor 85 irreführende/der Betriebssituation nicht angepasste Werte aufgenommen bzw. derartige Informationen geliefert werden. Gemäss der Darstellung in den Figuren 4a, b gerät der Pressriemen 32 nun aber in Kontakt mit dem Abweiser 80. Insbesondere wirkt der Pressriemen 32 auf die Kontaktfläche 98 des Abweisers 80 ein. Umso weiter der Pressriemen 32 sich in Richtung der Seitenwand 56 verlagert, um so größeren Einfluss nimmt der Pressriemen 32 auf die Kontaktfläche 98 und umso stärker wird der Abweiser 80 und damit die Schwenkwelle 76 verschwenkt.

In einer derartigen Betriebssituation, siehe Figuren 4a, b, verschwenkt die Schwenkwelle 76 aufgrund des Kontakts des Pressriemens 32 mit dem Abweiser 80 nun unabhängig von dem Aufnehmer 78, der in durch den schrägen bzw. nicht optimalen Verlauf des Pressriemens 32 ohne die Wirkung des Abweisers 80 möglicherweise eine unrichtige und/oder irreführende Information liefern würde. Durch die ansteigende Ausbildung der Kontaktfläche 98 verschwenkt die Schwenkwelle 62 besonders stark, so dass die durch den Sensor 85 gelieferten Werte, die in einer "normalen" Betriebssituation gelieferten Werte deutlich übersteigen. Diese Werte werden der Bedienungsperson und/oder der Steuereinrichtung zur Verfügung gestellt, so dass manuell und/oder automatisch Einfluss auf den Betrieb der Rundballenpresse 85 genommen werden kann.

### Wortliste

10 Rundballenpresse
12 Gehäuse
14 Rahmen
16 Fahrwerk
18 Deichsel
20 Aufnahmevorrichtung
22 Einlass
23 Ballenpressraum
24 untere, stationäre Rolle
26, 28 obere Rollen
30 endloses Pressmittel
32 Pressriemen
32a Innenseite
32b Außenseite
34 - 54 Walzen
56 Seitenwände
57 deltaförmiger Träger
AAchse
58 Spannarm
60 Lager
62 Welle
64 Schwenkrahmen
66 Bereich
68 Sensorvorrichtung
70 Sensoreinrichtungen
72 Halterung
74 Schwenkeinrichtung
76 Schwenkwelle
76a, b Endbereiche
78 Aufnehmer
80 Abweiser
82 Schwenkarm
84 Lagereinrichtung
85 Sensor
86 Federelement
86a, b Ende
88 Absatz
90 Rollen
92 Träger
94 Halter
96 Fläche
98 Kontaktfläche
100 Endbereich

## Patentansprüche

1. Rundballenpresse (10), insbesondere eine landwirtschaftliche Rundballenpresse mit variablem Pressraum (23) zur Herstellung zylindrischer Rundballen, mit wenigstens einem umlaufenden Pressmittel (30) und wenigstens einer Sensoreinrichtung (70) mit einer Schwenkeinrichtung (74), einem Aufnehmer (78), der an der Schwenkeinrichtung (74) in Richtung des Pressmittels (30) vorgespannt aufgenommen ist, so dass er in Kontakt mit dem Pressmittel (30) steht, und einem Sensor (85) zur Ermittlung der Position der Schwenkeinrichtung (74), **dadurch gekennzeichnet, dass** die Sensoreinrichtung (70) einen Abweiser (80) aufweist, der die Schwenkeinrichtung (74) bei Kontakt mit dem Pressmittel (30) unabhängig von der Spannung des Pressmittels (30) verschwenkt.

2. Rundballenpresse nach Anspruch 1, **dadurch gekennzeichnet, dass** die Schwenkeinrichtung (74) durch den Abweiser (80) abweichend von dem Aufnehmer (78), vorzugsweise stärker verschwenkt wird und/oder der Sensor (85) bei einer Verschwenkung durch den Abweiser (80) eine von der durch den Aufnehmer (78) bewirkten Information abweichende Information zur Verfügung stellt.

3. Rundballenpresse nach Anspruch 1 oder 2, **dadurch gekennzeichnet, dass** der Abweiser (80) an den Aufnehmer (78) an der Schwenkeinrichtung (74) zumindest im Wesentlichen angrenzend vorgesehen ist.

4. Rundballenpresse nach einem der vorherigen Ansprüche, **dadurch gekennzeichnet, dass** die Rundballenpresse (10) wenigstens eine Seitenwand (56) aufweist und die Sensoreinrichtung (70) an die Seitenwand (56) angrenzt und/oder der Abweiser (80) auf einer der Seitenwand (56) zugewandten Seite des Aufnehmers (78) vorgesehen ist.

5. Rundballenpresse nach einem der vorherigen Ansprüche, **dadurch gekennzeichnet, dass** der Aufnehmer (78) wenigstens eine Rolle (90) aufweist.

6. Rundballenpresse nach einem der vorherigen Ansprüche, **dadurch gekennzeichnet, dass** der Aufnehmer (78) und der Abweiser (80), vorzugsweise fest, mit einer gemeinsamen Schwenkwelle (76) verbunden sind.

7. Rundballenpresse nach einem der vorherigen Ansprüche, **dadurch gekennzeichnet, dass** die Sensoreinrichtung (70) eine Halterung (72) aufweist und die Schwenkeinrichtung (74) schwenkbar an der Halterung (72) vorgesehen ist.

8. Rundballenpresse nach einem der vorherigen Ansprüche, **dadurch gekennzeichnet, dass** der Sensor (85) als Potentiometer ausgebildet und/oder eine Verschwenkung der Schwenkeinrichtung (74) mit Bezug auf die Rundballenpresse (10) und/oder die Halterung (72) aufnimmt.

9. Rundballenpresse nach einem der vorherigen Ansprüche, **dadurch gekennzeichnet, dass** die Schwenkeinrichtung (74) mittels eines Federelements (86) vorgespannt ist, wobei das Federelement (86) vorzugsweise mit einem ersten Ende (86a), vorzugsweise über einen Schwenkarm (82), an der Schwenkeinrichtung (74) und mit einem zweiten Ende (86b) an der Halterung (72) angreift.

10. Rundballenpresse nach einem der vorherigen Ansprüche, **dadurch gekennzeichnet, dass** die Rundballenpresse (10) zwei Sensoreinrichtungen (70) aufweist, die jeweils angrenzend an eine Seitenwand (56) der Rundballenpresse (10) angeordnet sind, und dass das Pressmittel (30) vorzugsweise zwei Pressriemen (32) aufweist, wobei jeweils eine der Sensoreinrichtungen (70) mit einem der Pressriemen (32) zusammenwirkt.

## Claims

1. Roundbaler (10), in particular an agricultural roundbaler, having a variable pressing chamber (23) for producing cylindrical round bales, having at least one circulating pressing means (30) and having at least one sensor device (70) that has a pivoting device (74), has a pick-up (78), which is received on the pivoting device (74) so as to be preloaded in the direction of the pressing means (30) such that it is in contact with the pressing means (30), and has a sensor (85) for determining the position of the pivoting device (74), **characterized in that** the sensor device (70) has a deflector (80) which, upon contact with the pressing means (30), pivots the pivoting device (74) independently of the tension of the pressing means (30).

2. Roundbaler according to Claim 1, **characterized in that** the pivoting device (74) is pivoted by the deflector (80) differently than the pick-up (78), preferably more intensely, and/or the sensor (85), in the event of pivoting by the deflector (80), provides information different than the information brought about by the pick-up (78).

3. Roundbaler according to Claim 1 or 2, **characterized in that** the deflector (80) is provided in a manner at least substantially adjoining the pick-up (78) on the pivoting device (74).

4. Roundbaler according to one of the preceding claims, **characterized in that** the roundbaler (10) has at least one side wall (56) and the sensor device (70) adjoins the side wall (56) and/or the deflector (80) is provided on a side of the pick-up (78) that faces the side wall (56).

5. Roundbaler according to one of the preceding claims, **characterized in that** the pick-up (78) has at least one roller (90).

6. Roundbaler according to one of the preceding claims, **characterized in that** the pick-up (78) and the deflector (80) are connected, preferably fixedly, to a common pivot shaft (76).

7. Roundbaler according to one of the preceding claims, **characterized in that** the sensor device (70) has a holder (72) and the pivoting device (74) is provided pivotably on the holder (72).

8. Roundbaler according to one of the preceding claims, **characterized in that** the sensor (85) is in the form of a potentiometer and/or picks up pivoting of the pivoting device (74) with respect to the roundbaler (10) and/or the holder (72).

9. Roundbaler according to one of the preceding claims, **characterized in that** the pivoting device (74) is preloaded by means of a spring element (86), wherein the spring element (86) preferably acts on the pivoting device (74) at a first end (86a), preferably via a pivot arm (82), and acts on the holder (72) at a second end (86b).

10. Roundbaler according to one of the preceding claims, **characterized in that** the roundbaler (10) has two sensor devices (70) which are each arranged so as to adjoin a side wall (56) of the roundbaler (10), and **in that** the pressing means (30) has preferably two pressing belts (32), wherein in each case one of the sensor devices (70) interacts with one of the pressing belts (32).

## Revendications

1. Presse (10) à balles rondes, en particulier une presse à balles rondes agricole ayant une chambre de pressage variable (23) pour la fabrication de balles rondes cylindriques, comprenant au moins un moyen (30) de pressage circonférentiel et au moins un dispositif de détection (70) avec un dispositif de pivotement (74), un palpeur (78) qui est reçu sur le dispositif de pivotement (74) en étant précontraint en direction du moyen de pressage (30), de sorte qu'il est en contact avec le moyen de pressage (30), et un détecteur (85) pour déterminer la position du dispositif de pivotement (74), **caractérisé en ce que** le dispositif de détection (70) présente un déflecteur (80) qui fait pivoter le dispositif de pivotement (74) en cas de contact avec le moyen de pressage (30) indépendamment de la tension du moyen de pressage (30).

2. Presse à balles rondes selon la revendication 1, **caractérisée en ce que** le dispositif de pivotement (74) est pivoté par le déflecteur (80) d'une manière différente de celle du palpeur (78), de préférence plus fortement, et/ou le détecteur (85) fournit une information différente de celle apportée par le palpeur (78) lors d'un pivotement par le déflecteur (80).

3. Presse à balles rondes selon la revendication 1 ou la revendication 2, **caractérisée en ce que** le déflecteur (80) est prévu de manière à être au moins sensiblement adjacent au palpeur (78) sur le dispositif de pivotement (74).

4. Presse à balles rondes selon l'une des revendications précédentes, **caractérisée en ce que** la presse (10) à balles rondes présente au moins une paroi latérale (56) et le dispositif de détection (70) est adjacent à la paroi latérale (56) et/ou le déflecteur (80) est prévu sur un côté du palpeur (78) tourné vers la paroi latérale (56).

5. Presse à balles rondes selon l'une des revendications précédentes, **caractérisée en ce que** le palpeur (78) comprend au moins un rouleau (90).

6. Presse à balles rondes selon l'une des revendications précédentes, **caractérisée en ce que** le palpeur (78) et le déflecteur (80) sont reliés, de préférence de manière fixe, à un arbre de pivotement commun (76).

7. Presse à balles rondes selon l'une des revendications précédentes, **caractérisée en ce que** le dispositif de détection (70) comporte un support (72) et le dispositif de pivotement (74) est prévu pivotant sur le support (72).

8. Presse à balles rondes selon l'une des revendications précédentes, **caractérisée en ce que** le détecteur (85) est conçu sous la forme d'un potentiomètre et/ou enregistre un pivotement du dispositif de pivotement (74) par rapport à la presse (10) à balles rondes et/ou au support (72).

9. Presse à balles rondes selon l'une des revendications précédentes, **caractérisée en ce que** le dispositif de pivotement (74) est précontraint au moyen d'un élément à ressort (86), l'élément à ressort (86) agissant de préférence par une première extrémité (86a), de préférence par l'intermédiaire d'un bras pivotant (82), sur le dispositif de pivotement (74) et par une deuxième extrémité (86b) sur le support (72).

10. Presse à balles rondes selon l'une des revendications précédentes, **caractérisée en ce que** la presse (10) à balles rondes comporte deux dispositifs de détection (70), qui sont agencés chacun de manière adjacente à une paroi latérale (56) de la presse (10) à balles rondes, et **en ce que** le moyen de pressage (30) présente de préférence deux courroies de pressage (32), chacun des dispositifs de détection (70) coopérant avec une des courroies de pressage (32) respective.
